# EUROPEAN PATENT APPLICATION

(11) **EP 4 693 141 A1**
(43) Date of publication of application: **11.02.2026**
(21) Application number: 23930081.7
(22) Date of filing: 12.12.2023
(51) Int. Cl.: G06Q 20/32

(54) **PAYMENT PASSWORD GENERATION METHOD AND APPARATUS, PAYMENT REQUEST SENDING METHOD AND APPARATUS, DEVICE, AND MEDIUM**

(30) Priority: 27.03.2023 CN 202310308478
(71) Applicant: ALIPAY PAYMENT TECHNOLOGY CO., LTD., Shanghai 200120 (CN)
(72) Inventor: ZOU, Wenyuan, Hangzhou, Zhejiang 310000 (CN); LU, Yunzhou, Hangzhou, Zhejiang 310000 (CN); ZHONG, Haojie, Hangzhou, Zhejiang 310000 (CN); SUN, Jiayu, Hangzhou, Zhejiang 310000 (CN); LIAO, Wei, Hangzhou, Zhejiang 310000 (CN)
(74) Representative: Winter, Brandl - Partnerschaft mbB
(86) International application number: PCT/CN2023/138059
(87) International publication number: WO 2024/198516

(57) **Abstract**

Embodiments of this specification disclose a payment password generation method applied to a payment platform. The solution can include: obtaining a password payment request, where the password payment request is generated based on an order payment operation performed by a user in a first application, and the order payment operation is used to indicate to perform payment by using a second application; generating a payment link based on the password payment request, where the payment link is used to link to a transaction confirmation page, to pay for a target order based on the transaction confirmation page; and generating a payment password based on the payment link, where the payment password is used to be recognized by the second application from a clipboard of a terminal of the user, to pay for the target order.

## Description

### TECHNICAL FIELD

This specification relates to the field of electronic payment technologies, and in particular, to a payment password generation method and apparatus, a payment request sending method and apparatus, a device, and computer-readable medium.

### BACKGROUND

With the development of e-commerce, in some online transaction scenarios, a user can execute an order transaction in an application, and perform transaction payment in another application.

Currently, in some cross-application payment solutions, payment is performed based on a two-dimensional code. Specifically, the user places an order in a first application and performs a selection operation of performing payment by using a second application. In this case, link information that includes a payment page of the second application is stored in an album of a user terminal in a form of a two-dimensional code. Then, the user scans the two-dimensional code by using the second application, to open the payment page of the second application for payment. In some other cross-application payment solutions, payment is performed by using a browser of a user terminal. Specifically, the user places an order in a first application and performs a selection operation of performing payment by using a second application. In this case, the user first opens a payment page of the second application in the browser, and then jumps to the second application for payment.

In the cross-application payment solutions in the related technology, a payment procedure is long, and a user operation is complex and inconvenient. In view of this, a cross-application payment method that is more convenient for users needs to be provided.

### SUMMARY

Embodiments of this specification provide a payment password generation method and apparatus, a payment request sending method and apparatus, a device, and computer-readable medium, to resolve a problem that an existing cross-application payment method is inconvenient.

To resolve the above-mentioned technical problem, embodiments of this specification are implemented as follows: An embodiment of this specification provides a payment password generation method, applied to a payment platform. The method includes: obtaining a password payment request, where the password payment request is generated based on an order payment operation performed by a user in a first application, and the order payment operation is used to indicate to perform payment by using a second application; generating a payment link based on the password payment request, where the payment link is used to link to a transaction confirmation page, to pay for a target order based on the transaction confirmation page; and generating a payment password based on the payment link, where the payment password is used to be recognized by the second application from a clipboard of a terminal of the user, to pay for the target order.

An embodiment of this specification provides a payment request sending method, applied to a user terminal. The method includes: obtaining an open operation performed by a user on a second application in the user terminal; obtaining a payment password from a clipboard of the user terminal in response to the open operation, where the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page; and sending a payment request to the payment platform based on the payment password, where the payment request is used to request the payment platform to pay for the target order based on the payment link carried in the payment password.

An embodiment of this specification provides a payment password generation apparatus, applied to a payment platform. The apparatus includes: a request obtaining module, configured to obtain a password payment request, where the password payment request is generated based on an order payment operation performed by a user in a first application, and the order payment operation is used to indicate to perform payment by using a second application; a payment link generation module, configured to generate a payment link based on the password payment request, where the payment link is used to link to a transaction confirmation page, to pay for a target order based on the transaction confirmation page; and a payment password generation module, configured to generate a payment password based on the payment link, where the payment password is used to be recognized by the second application from a clipboard of a terminal of the user, to pay for the target order.

An embodiment of this specification provides a payment request sending apparatus, applied to a user terminal. The apparatus includes: an operation obtaining module, configured to obtain an open operation performed by a user on a second application in the user terminal; a payment password obtaining module, configured to obtain a payment password from a clipboard of the user terminal in response to the open operation, where the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page; and a payment request sending module, configured to send a payment request to the payment platform based on the payment password, where the payment request is used to request the payment platform to pay for the target order based on the payment link carried in the payment password.

An embodiment of this specification provides a payment platform, including: at least one processor; and a memory communicatively connected to the at least one processor. The memory stores instructions that can be executed by the at least one processor, and the instructions are executed by the at least one processor, to enable the at least one processor to perform the following operations: obtaining a password payment request, where the password payment request is generated based on an order payment operation performed by a user in a first application, and the order payment operation is used to indicate to perform payment by using a second application; generating a payment link based on the password payment request, where the payment link is used to link to a transaction confirmation page, to pay for a target order based on the transaction confirmation page; and generating a payment password based on the payment link, where the payment password is used to be recognized by the second application from a clipboard of a terminal of the user, to pay for the target order.

An embodiment of this specification provides a user terminal, including: at least one processor; and a memory communicatively connected to the at least one processor. The memory stores instructions that can be executed by the at least one processor, and the instructions are executed by the at least one processor, to enable the at least one processor to perform the following operations: obtaining an open operation performed by a user on a second application in the user terminal; obtaining a payment password from a clipboard of the user terminal in response to the open operation, where the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page; and sending a payment request to the payment platform based on the payment password, where the payment request is used to request the payment platform to pay for the target order based on the payment link carried in the payment password.

An embodiment of this specification provides a computer-readable medium. The computer-readable medium stores computer-readable instructions. The computer-readable instructions can be executed by a processor to implement the payment password generation method.

An embodiment of this specification provides a computer-readable medium. The computer-readable medium stores computer-readable instructions. The computer-readable instructions can be executed by a processor to implement the payment request sending method.

An embodiment of this specification can achieve at least the following beneficial effects: When the second application needs to be called in the first application for payment, the payment platform generates a payment link in response to a payment request, and further packages the payment link into a payment password. The payment password can be used to be copied to a clipboard of a terminal in which the first application and the second application are located and recognized by the second application. Then, a subsequent payment procedure can be completed in the second application based on the payment link parsed out from the payment password. Therefore, a cross-application payment procedure is short, a user operation is simple, and payment is convenient.

### BRIEF DESCRIPTION OF DRAWINGS

To describe the technical solutions in the embodiments of this specification more clearly, the following briefly describes the accompanying drawings needed for describing the embodiments. Clearly, the accompanying drawings in the following descriptions show merely some embodiments of this specification, and a person of ordinary skill in the art can still derive other drawings from these accompanying drawings without creative efforts.
FIG. 1 is a schematic diagram of an application scenario of a password payment method according to an embodiment of this specification;
FIG. 2 is a schematic flowchart of a payment password generation method applied to a payment platform according to an embodiment of this specification;
FIG. 3 is a schematic flowchart of a payment request sending method applied to a user terminal according to an embodiment of this specification;
FIG. 4 is a schematic interaction flowchart of a password payment method according to an embodiment of this specification;
FIG. 5 to FIG. 8 are schematic diagrams of user interfaces of a password payment method in an actual application scenario according to an embodiment of this specification;
FIG. 9 is a schematic structural diagram of a payment password generation apparatus corresponding to FIG. 2 according to an embodiment of this specification;
FIG. 10 is a schematic structural diagram of a payment request sending apparatus corresponding to FIG. 3 according to an embodiment of this specification; and
FIG. 11 is a schematic structural diagram of a payment platform or a user terminal according to an embodiment of this specification.

### DESCRIPTION OF EMBODIMENTS

To make the objectives, technical solutions, and advantages of one or more embodiments of this specification clearer, the following clearly and comprehensively describes the technical solutions in the one or more embodiments of this specification with reference to corresponding accompanying drawings and specific embodiments of this specification. Clearly, the described embodiments are merely some but not all of the embodiments of this specification. All other embodiments obtained by a person of ordinary skill in the art based on the embodiments of this specification without creative efforts shall fall within the protection scope of the one or more embodiments of this specification.

It should be understood that although terms "first", "second", "third", etc. may be used in this specification to describe various types of information, the information should not be limited to these terms. These terms are merely used to distinguish between information of a same type.

The technical solutions provided in the embodiments of this specification are described below in detail with reference to the accompanying drawings.

In the conventional technology, cross-application payment can be implemented based on a two-dimensional code. First, a user creates a transaction order in a first application, selects a second application as a payment channel, and initiates order payment. Then, a two-dimensional code including an order payment link can be stored in an album of a user terminal. Then, the user scans, by using the second application, the two-dimensional code stored in the album, to open a page corresponding to the order payment link, so as to complete payment for the transaction order. In this solution, the user needs to enable a code scanning module of the second application to recognize the two-dimensional code, so as to launch a checkout counter of the second application. Three applications (the first application, the user album, and the second application) need to be used, a long time is consumed, a procedure is long, and a user operation is cumbersome. In addition, in this solution, the user album is involved, and setting of the user album may affect search for the stored two-dimensional code.

In the conventional technology, cross-application payment can be implemented by using a browser. First, a user creates a transaction order in a first application, selects a second application as a payment channel, and initiates order payment. Then, the user can copy payment link information, open the payment link information in the browser, and then jump from the browser to a corresponding payment page of the second application, to complete payment for the transaction order. In this solution, the user needs to copy the payment link information, open the payment link information in the browser, and tap to jump to the second application, so as to launch a checkout counter of the second application. Three applications (the first application, the browser, and the second application) need to be used, a long time is consumed, a procedure is long, and a user operation is cumbersome. In addition, in some scenarios, the first application possibly cannot support the user in conveniently copying the payment link information.

In the related technology, cross-application payment can be implemented by using a short message service message channel. First, a user creates a transaction order in a first application, selects a second application as a payment channel, and initiates order payment. Then, payment link information can be sent to the user in a form of a short message service message. Then, the user taps the link information included in the short message service message, first opens the link information in a browser, and then jumps from the browser to a corresponding payment page of the second application, to complete payment for the transaction order. In this solution, the user needs to tap a payment link in the short message service message to jump to the browser, and tap in the browser to jump to the second application, and launch a checkout counter of the second application. Four applications (the first application, a messaging application, the browser, and the second application) need to be used, a longer time is consumed, a procedure is longer, and a user operation is more cumbersome. In addition, sending a short message service message results in an increase in use costs of a payment solution.

To resolve a disadvantage in the related technology, the solutions provide the following embodiments: After a user creates a transaction order in a first application, selects a second application as a payment channel, and initiates order payment, a payment password that carries a payment link is generated. The user only needs to tap to copy the payment password and open the second application, and the second application can automatically recognize the copied payment password, obtain the payment link in the payment password through parsing, and then launch a checkout counter to implement payment. Based on the solutions in the embodiments of this specification, the payment password is used as an order carrier, there are few user operations, there is no need to jump to another application, and an overall payment process is smooth and convenient.

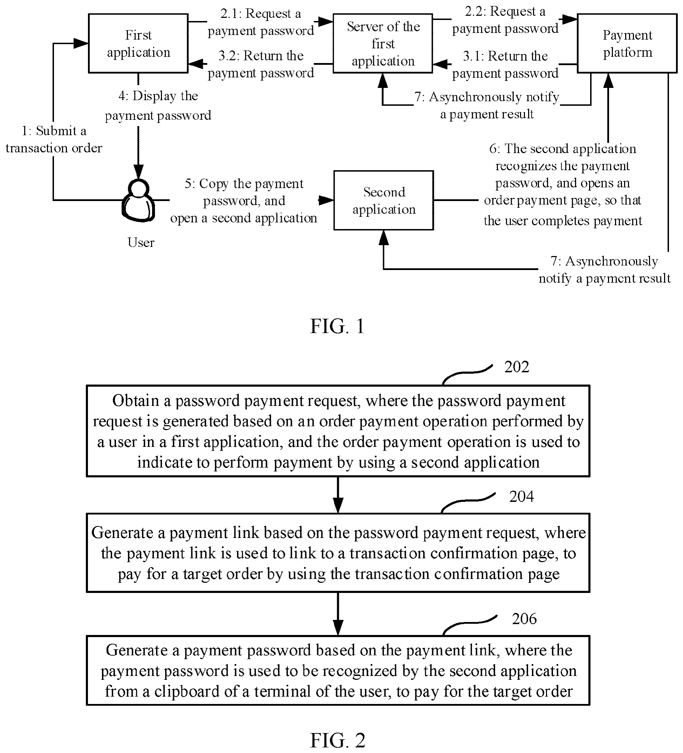

FIG. 1 is a schematic diagram of an application scenario of a password payment method according to an embodiment of this specification.

As shown in FIG. 1, a first application used for a product or service transaction, a second application used for transaction order payment, a server corresponding to the first application, and a server (that is, a payment platform) corresponding to the second application are involved in the password payment solution in this embodiment of this specification.

In actual application, (1) a user can submit a transaction order in the first application, and select the second application as a payment channel. (2) The first application can request a payment password from the payment platform (that is, the server corresponding to the second application) through the server of the first application. (3) The payment platform returns the payment password to the first application. (4) The first application displays the payment password to the user. (5) The user can copy the payment password and open the second application. (6) The second application automatically recognizes the payment password and opens a corresponding order payment page, so that the user completes payment. (7) The payment platform notifies the user of a payment result. The user can see the payment result in both the first application and the second application.

The password payment method provided in the embodiments of this specification is described below in detail with reference to the accompanying drawings.

FIG. 2 is a schematic flowchart of a payment password generation method applied to a payment platform according to an embodiment of this specification. The payment platform is a platform used to provide a payment function, or is a server corresponding to a second application used to provide a payment function.

From a program perspective, the procedure in FIG. 2 can be performed by a program loaded on an application server. It can be understood that the method can be performed by any apparatus, device, platform, or device cluster having computing and processing capabilities.

As shown in FIG. 2, the procedure can include step 202 to step 206.

Step 202: Obtain a password payment request, where the password payment request is generated based on an order payment operation performed by a user in a first application, and the order payment operation is used to indicate to perform payment by using the second application.

In actual application, the user initiates the order payment operation for a target order in the first application, and the order payment operation can indicate to perform payment by using the second application. The user is a user who needs to pay, for example, a user who purchases a product or a service. The first application can be an application used to execute a product or service transaction. For example, the user can select and purchase a product or a service, select a payment channel, and submit a purchase order in the first application. In this embodiment of this specification, the first application can include a first-type application running on an operating system of a user terminal, or can include a second-type application (also referred to as a small program) embedded within the first-type application. The second application can be an application used to perform payment, for example, an application corresponding to an acquiring institution such as a bank or an application corresponding to a third-party payment institution. In this embodiment of this specification, the first application and the second application can be located in a same user terminal.

In this embodiment of this specification, when the user performs, in the first application, the order payment operation (for example, selecting a payment channel, tapping "Confirm to pay", and selecting) used to indicate the second application to perform payment, a first server corresponding to the first application can receive an order payment request for performing payment by using the second application, and then the first server can send a password payment request to the payment platform corresponding to the second application to obtain a payment password. Therefore, that the payment platform obtains a password payment request in step 202 can specifically include: The payment platform receives the password payment request sent by the first server corresponding to the first application, where the password payment request is generated by the first server in response to the order payment request sent by the first application, and the order payment request is generated by the first application based on the order payment operation performed by the user.

In actual application, both the order payment request sent by the first application to the first server and the password payment request sent by the first server to the payment platform can carry payment service information of the target order. Specifically, the payment service information can include payee information and a transaction amount.

Step 204: Generate a payment link based on the password payment request, where the payment link is used to link to a transaction confirmation page, to pay for the target order based on the transaction confirmation page.

After receiving the password payment request, the payment platform can generate a payment password in response to the password payment request. Specifically, a process of generating the payment password can include: first generating the payment link used to pay for the target order (for example, step 204), and then packaging the payment link into the payment password (for example, step 206).

In actual application, the payment link is carried in the payment password and sent to the first application, and is further obtained by the second application by using a clipboard of a terminal in which the first application is located, to implement payment for the target order. Specifically, after obtaining the payment link obtained through parsing, the second application can jump to the transaction confirmation page to which the payment link points. The user performs a confirmation operation on the transaction confirmation page and completes a subsequent payment verification operation (for example, the user provides a payment key), to complete payment for the target order.

Step 206: Generate a payment password based on the payment link, where the payment password is used to be recognized by the second application from a clipboard of a terminal of the user, to pay for the target order.

In this embodiment of this specification, the payment password can be in a form of a character string, and a character in the character string can include one or more of various glyph units or symbols such as a letter, a number, a Chinese character, an operation symbol, a punctuation mark, and a functional symbol. For example, the character string of the payment password can be a character string (for example, 11429273) including only a number, a character string (for example, Jdys1905Z) including a number and a letter, a character string (for example, Jdys19 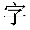 05Z) including a Chinese character, a number, a letter, and an operation symbol, etc. Clearly, in actual application, the payment password can be expressed in various forms that cannot be exhaustively listed. The above-mentioned examples are merely provided for illustrative purposes and do not constitute a limitation on the form of the payment password in this specification. Provided that a method for using the payment password is the same as the solution provided in this embodiment of this specification, the expression form of the payment password shall fall within the protection scope of this specification regardless of how the expression form of the payment password changes.

The payment password can be generated based on a preset password generation rule, for example, generated based on a preset algorithm. Specifically, a preset algorithm operation can be performed based on the payment link, to obtain a character string corresponding to the payment link. In actual application, in a feasible manner, a mapping relationship between a generated payment password and a corresponding payment link is stored on the payment platform. Therefore, when receiving a payment password parsing request, the payment platform can determine, based on the preset mapping relationship, the payment link corresponding to the payment password. In another feasible manner, the preset algorithm operation is an encryption operation. Therefore, when receiving a payment password parsing request, the payment platform can parse out the corresponding payment link from the payment password by using a decryption operation corresponding to the encryption operation.

In actual application, after the payment platform generates the payment password based on the payment link in step 206, the payment platform can further send the payment password to the first application. Specifically, the payment platform can send the payment password to the first server, and the first server sends the payment password to the first application. Then, the payment password can be copied to the clipboard by the terminal of the user. Therefore, the second application can recognize the payment password from the clipboard, and then pay for the target order.

Specifically, the payment password can be displayed to the user after being sent to the first application. The user copies the payment password to the clipboard in the first application, and opens the second application. In this case, the second application can actively obtain the payment password from the clipboard, and send the payment password to the payment platform, so that the payment platform parses out the corresponding payment link, and then completes a subsequent conventional payment procedure based on the payment link.

It should be understood that in the method in one or more embodiments of this specification, a sequence of some steps can be adjusted based on an actual requirement, or some steps can be omitted.

In the method in FIG. 2, when there is a need to request to use the second application in the first application for payment, the payment platform generates a payment link in response to a payment request, and further packages the payment link into a payment password. The payment password can be used to be copied to a clipboard of a terminal in which the first application and the second application are located and recognized by the second application. Then, a subsequent conventional payment procedure can be completed in the second application based on the payment link parsed out from the payment password. Therefore, a cross-application payment procedure is short, a user operation is simple, and payment is convenient.

Based on the method in FIG. 2, an embodiment of this specification further provides some specific implementations of the method, which are described below.

In actual application, the payment platform can specifically include an acquiring system and a code platform. The acquiring system is configured to process a procedure related to order payment, for example, receive a payment request, and generate a payment link. The code platform is configured to process a procedure related to a payment password, for example, generate a payment password, and parse a payment password.

Specifically, obtaining the password payment request in step 202 can specifically include: The acquiring system obtains the password payment request. Generating the payment link based on the password payment request in step 204 can specifically include: The acquiring system generates the payment link based on the payment password. Generating the payment password based on the payment link in step 206 can specifically include: The acquiring system sends a payment password generation request to the code platform, where the payment password generation request carries the payment link generated by the acquiring system; the code platform generates the payment password based on the payment link; and the acquiring system receives the payment password that is generated based on the payment link and that is returned by the code platform.

In this embodiment of this specification, after the payment platform generates the payment password, the payment password is copied to the clipboard in the first application, and obtained by the second application from the clipboard. Then, the second application sends the obtained payment password to the payment platform for parsing.

Specifically, the payment platform can receive a payment password parsing request sent by the second application; obtain the payment link corresponding to the payment password through parsing based on the payment password parsing request; and then send the payment link to the second application, where the payment link is used by the second application to jump to the transaction confirmation page based on the payment link to pay for the target order. In actual application, the above-mentioned steps of receiving the payment password parsing request, parsing out the payment link, and returning the payment link can be specifically performed by the code platform on the payment platform.

Then, the payment platform can receive a transaction confirmation request sent by the second application based on the transaction confirmation page, where the transaction confirmation page is displayed based on the payment link; determine basic transaction information in response to the transaction confirmation request, where the basic transaction information includes payee information, a transaction amount, and payer information; and then pay for the target order based on the basic transaction information, to obtain a payment result. In actual application, the above-mentioned procedure of receiving a transaction confirmation request, determining basic transaction information, and performing order payment to obtain a payment result can be specifically performed by the acquiring system on the payment platform.

The specific step of determining basic transaction information in response to the transaction confirmation request can include: obtaining the payer information carried in the transaction confirmation request; and obtaining the cached payment service information, where the payment service information includes the payee information and the amount. The payment service information can be cached after the payment platform receives the password payment request that carries the payment service information.

A specific process of paying for the target order based on the basic transaction information, to obtain a payment result can be a conventional payment procedure. Specifically, transaction risk verification can be performed first. After the transaction risk verification succeeds, a checkout counter is launched to obtain account payment verification information of the user (for example, payment password information, face information, and fingerprint information). After verification on the payment verification information succeeds, payment is completed. Content of the transaction risk verification can specifically include performing verification on a transaction device, a transaction scenario, etc., to ensure security of a transaction environment. An existing risk management means can be used as a transaction risk verification manner. This is not limited in this specification.

In actual application, the payment result can include a first payment result or a second payment result. The first payment result indicates a payment success, and the second payment result indicates a payment failure. There can be various reasons for the payment failure. For example, the risk verification fails, or the verification on the payment verification information fails.

In this embodiment of this specification, after the payment result is obtained, the payment result can be further sent to the first application and the second application. The acquiring system can send the payment result to the first server that sends the password payment request, and then the first server sends the payment result to the first application, so that the first application displays the payment result to the user. In addition, the acquiring system can send the payment result to the second application that sends the transaction confirmation request, so that the second application displays the payment result to the user. The user can see the payment result in the first application and the second application.

In an optional embodiment, a solution of performing payment based on the payment password is provided to resolve a problem of how to conveniently implement cross-application payment. In actual application, when requesting payment from the payment platform, the first server corresponding to the first application needs to call a password payment interface of the payment platform. The password payment interface is configured to receive and process a payment service for performing payment by using the payment password.

When receiving a call to the password payment interface, the payment platform can first verify qualification of a caller, to determine whether the caller has a capability and qualification of calling the password payment interface. Specifically, it can be verified whether the first application corresponding to the first server is an application that is allowed to perform payment by using the payment password.

Specifically, before the payment platform generates the payment password, the method can further include: determining, based on a product code of the first application carried in the password payment request, whether the first application belongs to a preset password payment application scenario, to obtain a password payment determining result. Correspondingly, generating the payment password based on the payment link can specifically include: if the password payment determining result indicates that the first application belongs to the preset password payment application scenario, generating the payment password based on the payment link. The product code can reflect a scenario type of the first application. The scenario type can include a merchant application, a third-party transaction platform application, a small program application on a third-party transaction platform, etc. In actual application, the payment platform can preset the password payment application scenario, that is, set which scenario types of applications can call the password payment interface, so that when the password payment interface is called, the above-mentioned determining of interface calling qualification is performed. For example, when the first application is a small program application in a third-party transaction platform application, it is considered that the application meets the preset password payment application scenario, and further it can be verified whether the first application has a call capability (for example, whether a related capability is preconfigured or a related agreement is reached). If the verification succeeds, the first application is allowed to call the password payment interface. For example, if the first application is a merchant application, because the merchant application can perform payment by using a conventional payment channel (by directly opening a corresponding transaction confirmation page in the second application), a payment process is more convenient, and therefore the application does not meet the preset password payment application scenario. In this embodiment of this specification, the password payment application scenario is limited based on the product code, thereby implementing proper allocation of payment interface resources.

In an optional embodiment, before generating the payment password based on the payment link, the method can further include: generating a password payment identifier corresponding to the payment link, where the password payment identifier includes a first identifier and a second identifier, the first identifier is used to indicate that a payment method for the target order to be paid for by using the payment link is password payment, and the second identifier is used to indicate that a payment method for the target order to be paid for by using the payment link is not password payment. Therefore, statistics on a password payment situation in a delimited area or a delimited time period can be collected based on the password payment identifier, to learn of information such as a password payment quantity and a payment success rate, and discover an exception in a timely manner in running of the password payment solution, so as to maintain stability of a password payment system and ensure payment experience of the user.

The password payment solution in the embodiments of this specification is described above from a perspective of a payment platform, and descriptions are provided below from a perspective of a user terminal.

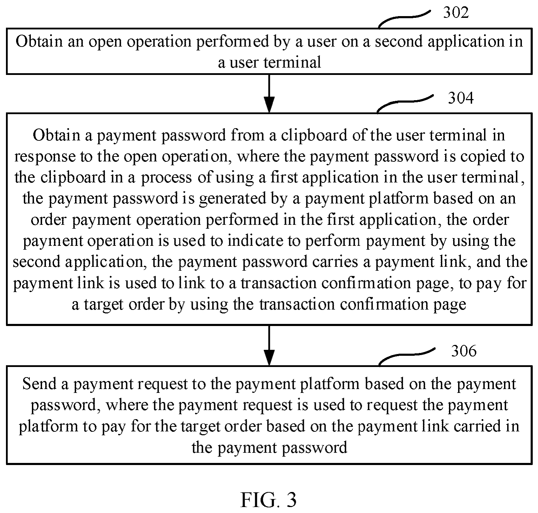

FIG. 3 is a schematic flowchart of a payment request sending method applied to a user terminal according to an embodiment of this specification.

From a program perspective, the procedure can be performed by a program loaded on an application terminal.

As shown in FIG. 3, the procedure can include the following steps: Step 302: Obtain an open operation performed by a user on a second application in the user terminal. Step 304: Obtain a payment password from a clipboard of the user terminal in response to the open operation, where the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page. Step 306: Send a payment request to the payment platform based on the payment password, where the payment request is used to request the payment platform to pay for the target order based on the payment link carried in the payment password.

Specifically, sending the payment request to the payment platform based on the payment password in step 306 can include: sending a payment password parsing request to the payment platform based on the payment password; receiving the payment link that is obtained through parsing based on the payment password and that is returned by the payment platform; jumping to the transaction confirmation page based on the payment link; and sending a transaction confirmation request to the payment platform based on the transaction confirmation page, where the transaction confirmation request is used to request the payment platform to pay for the target order.

Sending the transaction confirmation request to the payment platform based on the transaction confirmation page can specifically include: first, obtaining a transaction confirmation operation performed by the user on the transaction confirmation page, for example, tapping, by the user, a "Transaction confirmation" control; and then generating the transaction confirmation request in response to the transaction confirmation operation.

For better understanding, the following describes the solutions in the embodiments of this specification in detail with reference to a plurality of execution bodies such as a payment platform and a user terminal.

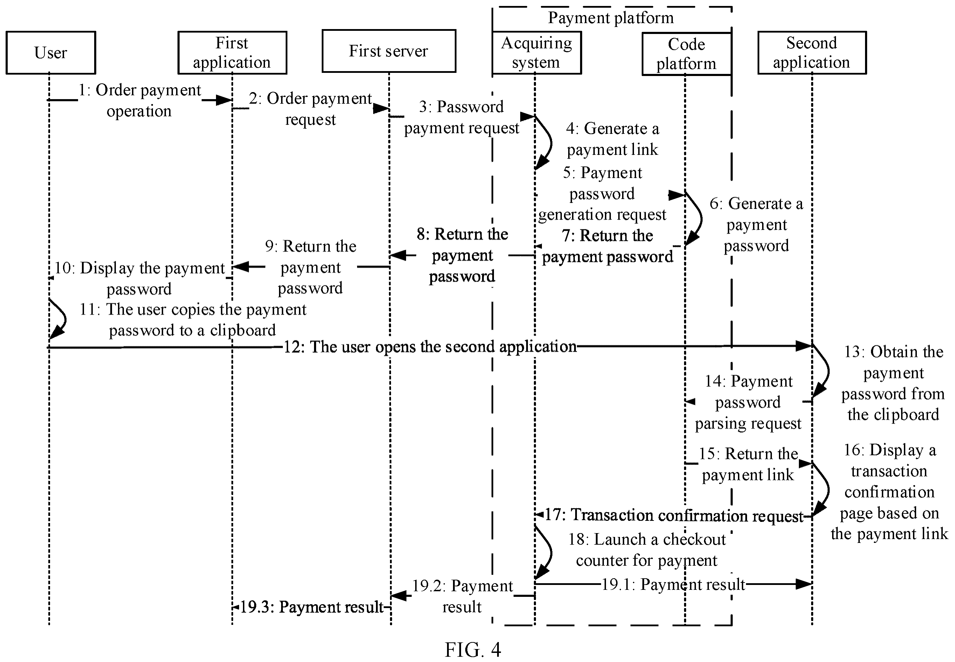

FIG. 4 is a schematic interaction flowchart of a password payment method according to an embodiment of this specification.

In FIG. 4, a first application represents an application used by a user to execute an order transaction, for example, an application for purchasing a product or a service. In actual application, the first application can be a small program application, for example, can be a small program installed in various types of applications such as a chat application and a video application. A first server is a server corresponding to the first application. A second application represents an application used by the user to perform order payment, for example, a third-party payment application. A payment platform is a server corresponding to the second application. The payment platform can specifically include an acquiring system and a code platform. The acquiring system is configured to process a procedure related to a payment order, and the code platform is configured to process a procedure related to a payment password. The first application and the second application are located in a same user terminal used by the user.

As shown in FIG. 4, (1) the user performs an order payment operation in the first application, for example, selects an order payment channel and taps "Confirm to pay".

(2) The first application sends an order payment request to the first server in response to the order payment operation performed by the user. Specifically, the first application can establish a target order. The target order can have amount information and payee information (for example, a payee identifier), and can further have other information such as a transaction order number and an order establishment time. In this embodiment of this specification, the amount information and the payee information are also referred to as payment service information. In actual application, the order payment request can carry payment channel information.

(3) In response to the order payment request, the first server sends a password payment request to a payment platform corresponding to the payment channel information. The password payment request is used to request a payment password used to pay for the target order from the payment platform. Specifically, the order payment request can carry at least the payment service information. In actual application, the first server can specifically send the password payment request to the payment platform by calling a password payment interface of the payment platform.

(4) After receiving the password payment request, the acquiring system on the payment platform generates a payment link used to pay for the target order. The payment link is used to display a transaction confirmation page after being opened on the user terminal, so that the user confirms and pays for the transaction. In actual application, the payment service information corresponding to the target order can be displayed on the transaction confirmation page. For example, at least the amount can be displayed, and the payee information (for example, a payee name) can be further optionally displayed.

(5) After generating the payment link, the acquiring system can send a payment password generation request to the code platform. Specifically, the payment password generation request can carry the payment link.

(6) The code platform generates a payment password based on the payment link. In this embodiment of this specification, the payment password can be a character string that includes various types of characters. A manner of generating the payment password is not specifically limited. In actual application, optionally, the code platform can store a mapping relationship between a generated payment password and a corresponding payment link.

(7) The acquiring system receives the payment password sent by the code platform.

(8) The acquiring system on the payment platform sends the payment password to the first server that sends the password payment request.

(9) The first server sends the payment password to the first application that sends the order payment request.

(10) The first application displays the payment password to the user. In actual application, a control for the user to tap and copy the payment password can be further provided to the user.

(11) The user copies the payment password to a clipboard.

(12) The user opens the second application.

(13) The second application automatically obtains the payment password from the clipboard. In actual application, the user can alternatively paste the payment password into a search box of the second application, so that the second application obtains the payment password.

(14) After obtaining the payment password, the second application can request to parse the payment password from the payment platform. Specifically, a payment password parsing request can be sent to the code platform.

(15) In response to the payment password parsing request, the code platform obtains the corresponding payment link through parsing based on the payment password carried in the payment password parsing request, and sends the payment link to the second application.

(16) The second application displays a transaction confirmation page corresponding to the payment link based on the payment link. Optionally, before the transaction confirmation page corresponding to the payment link is displayed, payment password viewing prompt information can be displayed, to prompt the user that the payment password has obtained. In addition, a payment password viewing control can be further displayed, so that the transaction confirmation page corresponding to the payment link is displayed after the user taps the payment password viewing control.

(17) The second application obtains a transaction confirmation operation performed by the user on the transaction confirmation page (for example, tapping a "Confirm transaction" control), and sends a transaction confirmation request to the acquiring system on the payment platform. Specifically, the transaction confirmation request can carry the payer information.

(18) After receiving the transaction confirmation request, the acquiring system on the payment platform can perform a subsequent conventional payment procedure based on the payee information, the amount, the payer information, etc. For example, risk control verification is performed, and information such as a payment key entered by the user is obtained, to complete payment.

(19) The acquiring system on the payment platform sends a payment result to the second application, and sends the payment result to the first server, so that the first server sends the payment result to the first application. From a user perspective, the payment result can be seen in the first application and the second application.

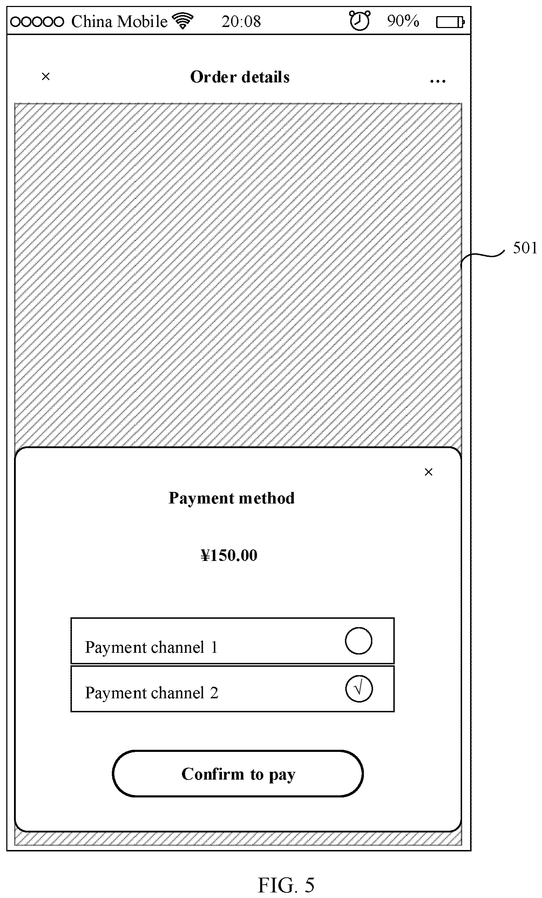

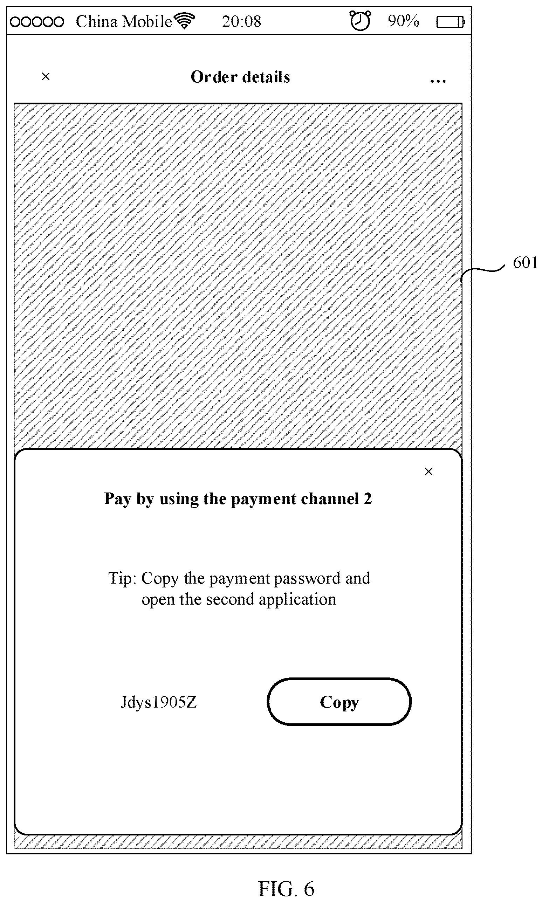

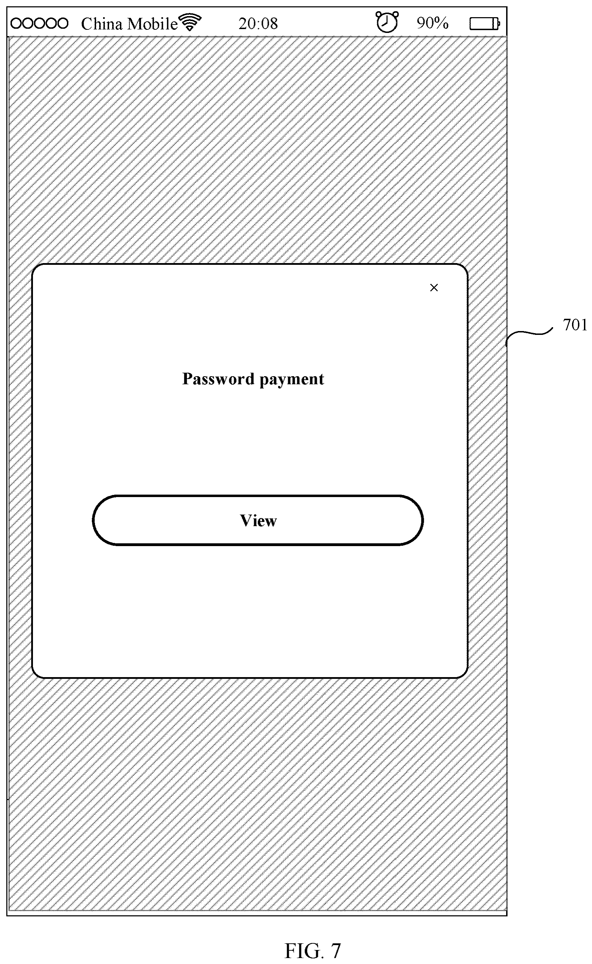

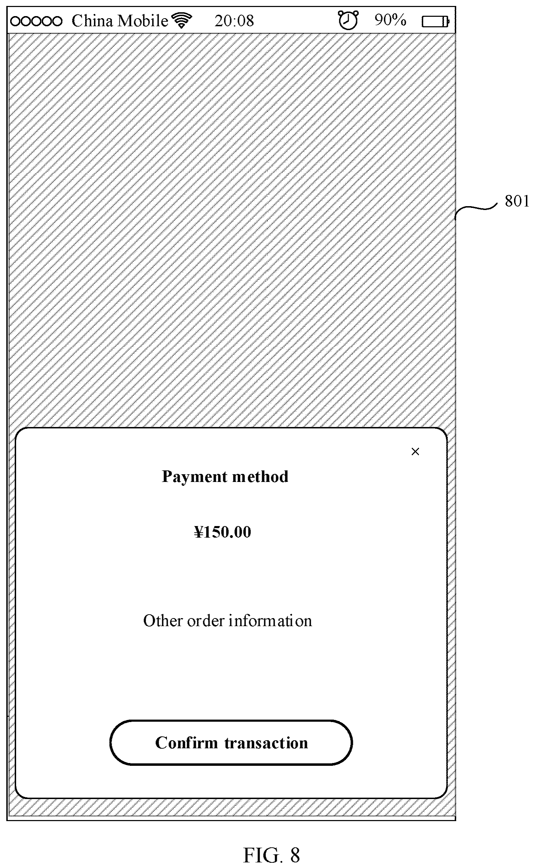

Based on the above-mentioned descriptions, an embodiment of this specification provides a schematic diagram of a user interface of a password payment method in an actual application scenario, as shown in FIG. 5 to FIG. 8. In FIG. 5 to FIG. 8, an area delimited by a slash represents a lower-layer page (a page 501 in FIG. 5, a page 601 in FIG. 6, a page 701 in FIG. 7, and a page 801 in FIG. 8), and specifically, represents a page that is located at a lower layer of a pop-up window. Specific text content on the lower-layer page is not related to the technical content described in the accompanying drawings.

In FIG. 5, a schematic diagram of a user interface for a user to select a payment channel and perform an order payment operation in a first application is displayed. In the example in FIG. 5, the user selects a payment channel 2 and taps "Confirm to pay". Subsequently, the first application can send an order payment request to a first server, where the order payment request carries payment service information and payment channel information, so that the first server obtains a payment password from a payment platform corresponding to the payment channel information and returns the payment password to the first application.

In FIG. 6, a user interface for displaying the payment password to the user in the first application is displayed. In the example in FIG. 6, the user can tap a copy control to copy the payment password (Jdys1905Z) to a clipboard of a user terminal.

In FIG. 7, payment password viewing prompt information displayed in a second application after the user opens the second application is displayed. In actual application, before the page shown in FIG. 7 is displayed, the second application can send a payment password parsing request to the payment platform, and obtain a payment link obtained through parsing. After the page shown in FIG. 7 is displayed, the user can tap "View", to display a page shown in FIG. 8.

In FIG. 8, a page for the user to submit a transaction confirmation request is displayed. In actual application, some transaction information such as a payment amount and payee information is displayed on the page shown in FIG. 8. When the user taps a "Confirm transaction" control, the transaction confirmation request is sent to the payment platform. Subsequently, after receiving the transaction confirmation request, the payment platform can perform payment based on a conventional procedure.

It should be noted that only examples of user transaction interfaces according to the solutions in the embodiments of this specification are shown in FIG. 5 to FIG. 8, are provided for illustrative and explanatory purposes, and do not constitute a limitation on the application scope of the embodiments of this specification. In actual application, a display manner and content of the user interface can be different from the examples provided in FIG. 5 to FIG. 8.

Based on the same idea, an embodiment of this specification further provides an apparatus corresponding to the above-mentioned method.

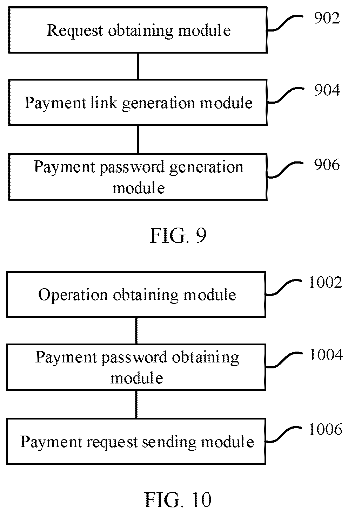

FIG. 9 is a schematic structural diagram of a payment password generation apparatus corresponding to FIG. 2 according to an embodiment of this specification.

As shown in FIG. 9, the apparatus is applied to a payment platform, and can specifically include: a request obtaining module 902, configured to obtain a password payment request, where the password payment request is generated based on an order payment operation performed by a user in a first application, and the order payment operation is used to indicate to perform payment by using a second application; a payment link generation module 904, configured to generate a payment link based on the password payment request, where the payment link is used to link to a transaction confirmation page, to pay for a target order based on the transaction confirmation page; and a payment password generation module 906, configured to generate a payment password based on the payment link, where the payment password is used to be recognized by the second application from a clipboard of a terminal of the user, to pay for the target order.

FIG. 10 is a schematic structural diagram of a payment request sending apparatus corresponding to FIG. 3 according to an embodiment of this specification.

As shown in FIG. 10, the apparatus is applied to a user terminal, and can specifically include: an operation obtaining module 1002, configured to obtain an open operation performed by a user on a second application in the user terminal; a payment password obtaining module 1004, configured to obtain a payment password from a clipboard of the user terminal in response to the open operation, where the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page; and a payment request sending module 1006, configured to send a payment request to the payment platform based on the payment password, where the payment request is used to request the payment platform to pay for the target order based on the payment link carried in the payment password.

It can be understood that the above-mentioned modules refer to computer programs or program segments, and are configured to perform one or more specific functions. In addition, distinction between the above-mentioned modules does not indicate that actual program code needs to be separated.

Based on a same idea, an embodiment of this specification further provides a device corresponding to the above-mentioned method.

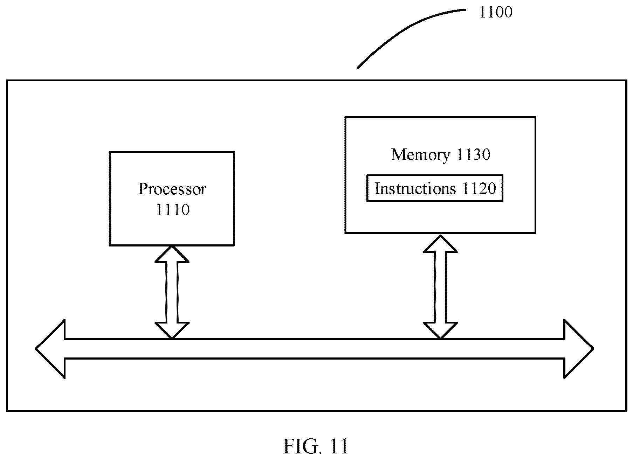

FIG. 11 is a schematic structural diagram of a payment platform or a user terminal according to an embodiment of this specification.

As shown in FIG. 11, if the device 1100 is a payment platform, the device 1100 can include: at least one processor 1110; and a memory 1130 communicatively connected to the at least one processor. The memory 1130 stores instructions 1120 that can be executed by the at least one processor 1110, and the instructions are executed by the at least one processor 1110, to enable the at least one processor 1110 to perform the following operations: obtaining a password payment request, where the password payment request is generated based on an order payment operation performed by a user in a first application, and the order payment operation is used to indicate to perform payment by using a second application; generating a payment link based on the password payment request, where the payment link is used to link to a transaction confirmation page, to pay for a target order based on the transaction confirmation page; and generating a payment password based on the payment link, where the payment password is used to be recognized by the second application from a clipboard of a terminal of the user, to pay for the target order.

As shown in FIG. 11, if the device 1100 is a user terminal, the device 1100 can include: at least one processor 1110; and a memory 1130 communicatively connected to the at least one processor. The memory 1130 stores instructions 1120 that can be executed by the at least one processor 1110, and the instructions are executed by the at least one processor 1110, to enable the at least one processor 1110 to perform the following operations: obtaining an open operation performed by a user on a second application in the user terminal; obtaining a payment password from a clipboard of the user terminal in response to the open operation, where the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page; and sending a payment request to the payment platform based on the payment password, where the payment request is used to request the payment platform to pay for the target order based on the payment link carried in the payment password.

Based on a same idea, an embodiment of this specification further provides a computer-readable medium corresponding to the above-mentioned method. The computer-readable medium stores computer-readable instructions, and the computer-readable instructions can be executed by a processor to implement the following method:

obtaining a password payment request, where the password payment request is generated based on an order payment operation performed by a user in a first application, and the order payment operation is used to indicate to perform payment by using a second application; generating a payment link based on the password payment request, where the payment link is used to link to a transaction confirmation page, to pay for a target order based on the transaction confirmation page; and generating a payment password based on the payment link, where the payment password is used to be recognized by the second application from a clipboard of a terminal of the user, to pay for the target order.

Based on a same idea, an embodiment of this specification further provides a computer-readable medium corresponding to the above-mentioned method. The computer-readable medium stores computer-readable instructions, and the computer-readable instructions can be executed by a processor to implement the following method: obtaining an open operation performed by a user on a second application in the user terminal; obtaining a payment password from a clipboard of the user terminal in response to the open operation, where the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page; and sending a payment request to the payment platform based on the payment password, where the payment request is used to request the payment platform to pay for the target order based on the payment link carried in the payment password.

Specific embodiments of this specification are described above. In some cases, actions or steps described in the claims can be performed in a sequence different from that in the embodiments and the desired results can still be achieved. In addition, the process depicted in the accompanying drawings does not necessarily need a particular sequence or consecutive sequence to achieve the desired results. In some implementations, multi-tasking and parallel processing are feasible or may be advantageous.

The embodiments of this specification are described in a progressive manner. For same or similar parts of the embodiments, refer to the embodiments.

The apparatus and device provided in the embodiments of this specification correspond to the method. Therefore, the apparatus and device also have beneficial technical effects similar to those of the corresponding method. Because the beneficial technical effects of the method are described above in detail, the beneficial technical effects of the corresponding apparatus and device are not described herein.

The system, apparatus, module, or unit described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is separately described by dividing the apparatus into various units based on functions. Certainly, when this specification is implemented, functions of the units can be implemented in one or more pieces of software and/or hardware.

A person skilled in the art should understand that the embodiments of this specification can be provided as methods, systems, or computer program products. Therefore, a form of hardware only embodiments, software only embodiments, or embodiments with a combination of software and hardware can be used in this specification. In addition, a form of a computer program product that is implemented on one or more computer-usable storage media (including but not limited to a disk memory, a CD-ROM, an optical memory, etc.) that include computer-usable program code can be used in this specification.

This specification is described with reference to the flowcharts and/or block diagrams of the method, the device (system), and the computer program product according to the embodiments of this specification. It should be understood that each procedure and/or block in the flowcharts and/or the block diagrams and a combination of procedures and/or blocks in the flowcharts and/or the block diagrams can be implemented by using computer program instructions. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

Alternatively, these computer program instructions can be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, these computer program instructions can be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It should be further noted that the terms "include", "comprise", or any other variants thereof are intended to cover a non-exclusive inclusion, so that a process, a method, a product, or a device that includes a list of elements not only includes those elements but also includes other elements which are not expressly listed, or further includes elements inherent to such a process, method, product, or device. Without more constraints, an element preceded by "includes a ..." does not preclude the presence of additional identical elements in the process, method, product, or device that includes the element.

This specification can be described in the general context of computer-executable instructions, for example, a program module. Usually, the program module includes a routine, a program, an object, a component, a data structure, etc. for executing a specific task or implementing a specific abstract data type. This specification can alternatively be practiced in distributed computing environments. In the distributed computing environments, tasks are executed by remote processing devices connected through a communication network. In the distributed computing environments, the program module can be located in local and remote computer storage media including storage devices.

The above-mentioned descriptions are merely embodiments of this specification, and are not intended to limit this specification. A person skilled in the art can make various changes and variations to this specification. Any modifications, equivalent replacements, improvements, etc. made without departing from the spirit and principle of this specification shall fall within the scope of the claims of this specification.

## Claims

1. A payment password generation method, applied to a payment platform, wherein the method comprises:
obtaining a password payment request, wherein the password payment request is generated based on an order payment operation performed by a user in a first application, and the order payment operation is used to indicate to perform payment by using a second application;
generating a payment link based on the password payment request, wherein the payment link is used to link to a transaction confirmation page, to pay for a target order based on the transaction confirmation page; and
generating a payment password based on the payment link, wherein the payment password is used to be recognized by the second application from a clipboard of a terminal of the user, to pay for the target order.

2. The method according to claim 1, wherein the payment platform comprises an acquiring system and a code platform, and generating the payment password based on the payment link specifically comprises:
sending, by the acquiring system, a payment password generation request to the code platform, wherein the payment password generation request carries the payment link generated by the acquiring system; and
receiving, by the acquiring system, the payment password that is generated based on the payment link and that is returned by the code platform.

3. The method according to claim 1, wherein before generating the payment password based on the payment link, the method further comprises:
determining, based on a product code of the first application carried in the password payment request, whether the first application belongs to a preset password payment application scenario, to obtain a password payment determining result; and
generating the payment password based on the payment link specifically comprises:
if the password payment determining result indicates that the first application belongs to the preset password payment application scenario, generating the payment password based on the payment link.

4. The method according to claim 1, before generating the payment password based on the payment link, further comprising:
generating a password payment identifier corresponding to the payment link, wherein the password payment identifier comprises a first identifier and a second identifier, the first identifier is used to indicate that a payment method for the target order to be paid for by using the payment link is password payment, and the second identifier is used to indicate that a payment method for the target order to be paid for by using the payment link is not password payment.

5. The method according to claim 1, wherein obtaining the password payment request comprises:
receiving a password payment request sent by a first server corresponding to the first application, wherein the password payment request is generated by the first server in response to an order payment request sent by the first application, and the order payment request is generated by the first application based on the order payment operation performed by the user; and
after generating the payment password based on the payment link, the method further comprises:
sending the payment password to the first server, wherein the payment password is used to be sent by the first server to the first application, and is used to be copied to the clipboard by the terminal of the user.

6. The method according to claim 1, wherein the password payment request carries payment service information of the target order, and the payment service information comprises payee information and a transaction amount.

7. The method according to claim 1, after generating the payment password based on the payment link, further comprising:
receiving a transaction confirmation request sent by the second application based on the transaction confirmation page, wherein the transaction confirmation page is displayed based on the payment link;
determining basic transaction information in response to the transaction confirmation request, wherein the basic transaction information comprises payee information, a transaction amount, and payer information; and
paying for the target order based on the basic transaction information, to obtain a payment result.

8. The method according to claim 7, before receiving the transaction confirmation request sent by the second application based on the transaction confirmation page, further comprising:
receiving a payment password parsing request sent by the second application;
obtaining the payment link corresponding to the payment password through parsing based on the payment password parsing request; and
sending the payment link to the second application, wherein the payment link is used by the second application to jump to the transaction confirmation page based on the payment link to pay for the target order.

9. The method according to claim 7, after paying for the target order based on the basic transaction information, to obtain a payment result, further comprising:
sending the payment result to the first application and the second application.

10. A payment request sending method, applied to a user terminal, wherein the method comprises:
obtaining an open operation performed by a user on a second application in the user terminal;
obtaining a payment password from a clipboard of the user terminal in response to the open operation, wherein the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page; and
sending a payment request to the payment platform based on the payment password, wherein the payment request is used to request the payment platform to pay for the target order based on the payment link carried in the payment password.

11. The method according to claim 10, wherein sending the payment request to the payment platform based on the payment password comprises:
sending a payment password parsing request to the payment platform based on the payment password;
receiving the payment link that is obtained through parsing based on the payment password and that is returned by the payment platform;
jumping to the transaction confirmation page based on the payment link; and
sending a transaction confirmation request to the payment platform based on the transaction confirmation page, wherein the transaction confirmation request is used to request the payment platform to pay for the target order.

12. The method according to claim 11, wherein sending the transaction confirmation request to the payment platform based on the transaction confirmation page specifically comprises:
obtaining a transaction confirmation operation performed by the user on the transaction confirmation page; and
generating the transaction confirmation request in response to the transaction confirmation operation.

13. A payment password generation apparatus, applied to a payment platform, wherein the apparatus comprises:
a request obtaining module, configured to obtain a password payment request, wherein the password payment request is generated based on an order payment operation performed by a user in a first application, and the order payment operation is used to indicate to perform payment by using a second application;
a payment link generation module, configured to generate a payment link based on the password payment request, wherein the payment link is used to link to a transaction confirmation page, to pay for a target order based on the transaction confirmation page; and
a payment password generation module, configured to generate a payment password based on the payment link, wherein the payment password is used to be recognized by the second application from a clipboard of a terminal of the user, to pay for the target order.

14. A payment request sending apparatus, applied to a user terminal, wherein the apparatus comprises:
an operation obtaining module, configured to obtain an open operation performed by a user on a second application in the user terminal;
a payment password obtaining module, configured to obtain a payment password from a clipboard of the user terminal in response to the open operation, wherein the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page; and
a payment request sending module, configured to send a payment request to the payment platform based on the payment password, wherein the payment request is used to request the payment platform to pay for the target order based on the payment link carried in the payment password.

15. A payment platform, comprising:
at least one processor; and
a memory communicatively connected to the at least one processor, wherein
the memory stores instructions that can be executed by the at least one processor, and the instructions are executed by the at least one processor, to enable the at least one processor to perform the following operations:
obtaining a password payment request, wherein the password payment request is generated based on an order payment operation performed by a user in a first application, and the order payment operation is used to indicate to perform payment by using a second application;
generating a payment link based on the password payment request, wherein the payment link is used to link to a transaction confirmation page, to pay for a target order based on the transaction confirmation page; and
generating a payment password based on the payment link, wherein the payment password is used to be recognized by the second application from a clipboard of a terminal of the user, to pay for the target order.

16. A user terminal, comprising:
at least one processor; and
a memory communicatively connected to the at least one processor, wherein
the memory stores instructions that can be executed by the at least one processor, and the instructions are executed by the at least one processor, to enable the at least one processor to perform the following operations:
obtaining an open operation performed by a user on a second application in the user terminal;
obtaining a payment password from a clipboard of the user terminal in response to the open operation, wherein the payment password is copied to the clipboard in a process of using a first application in the user terminal, the payment password is generated by a payment platform based on an order payment operation performed in the first application, the order payment operation is used to indicate to perform payment by using the second application, the payment password is used to parse out a corresponding payment link, and the payment link is used to link to a transaction confirmation page, to pay for a target order based on the transaction confirmation page; and
sending a payment request to the payment platform based on the payment password, wherein the payment request is used to request the payment platform to pay for the target order based on the payment link carried in the payment password.

17. A computer-readable medium, wherein the computer-readable medium stores computer-readable instructions, and the computer-readable instructions can be executed by a processor to implement the payment password generation method according to any one of claims 1 to 9.

18. A computer-readable medium, wherein the computer-readable medium stores computer-readable instructions, and the computer-readable instructions can be executed by a processor to implement the payment request sending method according to any one of claims 10 to 12.
